# EUROPÄISCHE PATENTSCHRIFT

(11) **EP 0 572 823 B1**
(45) Veröffentlichungstag und Bekanntmachung des Hinweises auf die Patenterteilung: **18.12.1996**
(21) Anmeldenummer: 93107638.4
(22) Anmeldetag: 11.05.1993
(51) Int. Cl.: F16L 5/02, H02G 3/22

(54) **Mauerdurchführung**
Wall feedthrough
Traversée de mur

(30) Priorität: 29.05.1992 DE 9207293 U
(43) Veröffentlichungstag der Anmeldung: 08.12.1993
(73) Patentinhaber: REHAU AG + Co, 95111 Rehau (DE)
(72) Erfinder: Beyer, Wolfgang, c/o Rehau AG + Co, D-95111 Rehau (DE); Haunstetter, Karl-Heinz, c/o Rehau AG + Co, D-95111 Rehau (DE)

(56) Entgegenhaltungen:
- EP-A- 0 242 189
- EP-A- 0 246 894
- DE-A- 3 629 140
- DE-U- 8 814 413
- DE-U- 8 911 802

## Beschreibung

Die Erfindung betrifft eine Mauerdurchführung für Rohre, Kabel oder Leitungen.

Mauerdurchführungen dieser Art sind in vielerlei Ausführungsform bekannt. Es wird beispielsweise auf die DE-A 36 29 140 verwiesen. Für die dort beschriebene Durchführung von Kabeln, Rohren oder Leitungen durch ein Mauerwerk wird zunächst ein Mauerdurchbruch durch dieses Mauerwerk hergestellt. In diesen Mauerdurchbruch wird das die Mauerdurchführung bildende Bauteil eingesetzt, welches aus zwei Hohlkörpern besteht. Beide Hohlkörper sind durch eine Schraubenfeder miteindander verbunden, die ihrerseits durch einen Schrumpfschlauch nach außen abgedeckt ist, wobei der Schrumpfschlauch an Wandbereichen der Hohlkörper befestigt, z.B. verklebt ist. Der Schrumpfschlauch wird danach auf die gespannte Schraubenfeder aufgeschrumpft, so daß die Schrumpfschlauchwandung in die Bereiche zwischen zwei Wendeln der Schraubenfeder eindringen kann. Auf diese Weise kann sich der Schrumpfschlauch nach Art eines Kompensators ausdehnen, sobald sich die Schraubenfeder zwischen den beiden Hohlkörpern dehnt.

Beide Hohlkörper besitzen bei der bekannten Ausführungsart einen den Durchmesser der Hohlkörper überragenden Kragen, Mit dem sich die Mauerdurchführung im Endsitz an den zugeordneten Wandbereichen des Mauerwerks abstützt. Hierbei können zwischen dem Kragen und dem Mauerwerk Dichtungsmittel angeordnet sein, welche eine zusätzliche Abdichtung der Maueröffnung bei eingesetzter Mauerdurchführung bewirken.

Vor der Verbringung der bekannten Mauerdurchführung in den Endsitz, d.h. vor dem Spannen der Schraubenfeder zwischen den beiden Hohlkörpern kann in die verbleibende Maueröffnung ein Dichtungsmittel, z.B. eine dauerelastische oder dauerplastische Masse eingefüllt werden. Diese Masse befindet sich dann in dem Ringspalt zwischen dem Wauerdurchbruch, den Hohlkörpern und dem Schrumpfschlauch über der Schraubenfeder. Wird die gespannte Schraubenfeder danach entspannt, d.h. zieht sich die Schraubenfeder zusammen und verpresst die an den Hohlkörpern befindlichen Kragen an den zugeordneten Flächen des Mauerwerks, bewirkt dieses Zusammenztehen auch ein Verpressen der dauerelastischen bzw. dauerplastischen Masse im Ringspalt zwischen dem Mauerdurchbruch und der Außenoberfläche der Mauerdurchführung. Damit wird eine elastische Abdichtung der Mauerdurchführung in der Mauer Öffnung erzielt.

Der Nachteil der bekannten Vorrichtung in dieser Art wird darin gesehen, daß die zum Aufbau der Mauerdurchführung verwendeten hohlen Bauteile Formteile sind, die jeweils einer bestimmten Mauerdicke entsprechen. So benötigt man für dickere Mauern andere Formteile als für dünnere Mauern und umgekehrt.

Aus dem DE-U 89 15 213 ist eine Mauerdurchführung bekannt, deren Enden schrumpffähig ausgebildet sind. Wach dem Einsetzen der Mauerdurchführung mit dem darin geführten Kabel in die Wandöffnung werden die schrumpffähigen Enden der Durchführung erhitzt und dichten somit das Kabel gegenüber dem Innenraum der Mauerdurchführung ab. Die Abdichtung der Mauerdurchführung gegen das Mauerwerk erfolgt Mit einem schnell härtenden Zementmörtel oder anderen geeigneten Dichtmitteln, die in den ringförmigen Raum zwischen dem Mauerdurchbruch und der Mauerdurchführung auf beiden Wandseiten eingebracht werden.

Dieses bekannte Abdichtverfahren setzt eine Bohrung voraus, deren Innendurchmesser deutlich größer ist als der Außendurchmesser der Mauerdurchführung. Wird bei der Montage ein Bohrdurchmesser gewählt, der dem Außendurchmesser der Mauerdurchführung entspricht, ist ein ordnungsgemäßes Abdichten mit dem Dichtmaterial nicht mehr möglich.

Um diesen Nachteil abzustellen wird nach dem bekannten Stand der Technik der Außendurchmesser der Mauerdurchführung in einem Mittleren Bereich größer gestaltet als in den übrigen Bereichen. Darüberhinaus ist in der Mitte der Mauerdurchführung ein umlaufender Verdickungsring vorgesehen, dessen Außendurchmesser größer ist als der Durchmesser der verbleibenden Bereiche der Mauerdurchführung. Durch diese Maßnahme soll der die Montage der Mauerdurchführung Ausführende gezwungen werden, einen genügend großen Bohrlochdurchmesser zu wählen, so daß eine wichtige Voraussetzung für eine einwandfreie Abdichtung zwischen der Mauerdurchführung und der Wand gegeben sein soll. Der Nachteil ist hier darin zu sehen, daß das größere Aufbohren keine Gewährleistung dafür gibt, daß der die Montage Durchführende den zwischen der Mauerdurchführung und der Bohrung durch das Mauerwerk verbleibenden Spalt auch tatsächlich mit Dichtungsmaterial völlig ausfüllt. Wenn dieser Spalt nur im Außenbereich zugeschmiert wird, können Spannungen des starren Durchführungsbereiches die dünne Dichtmittelschicht absprengen, so daß eine Abdichtung zwischen Mauerdurchführung und Mauerwerk nicht mehr gegeben ist.

Diesen Nachteil möchte die DE-U 89 11 802 dadurch vermeiden, daß auf der Außenoberfläche der rohrförmigen Mauerdurchführung Zentrierelemente angeordnet sind, welche aus einem elastischen Kunststoff bestehen. Diese Zentrierelemente sollen einmal die rohrförmige Mauerdurchführung zentrisch im Mauerdurchbruch halten, zum anderen sollen sie für die Abdichtung zum Mauerwerk sorgen und darüberhinaus noch als Begrenzungsanschlag für die einzufüllende Verguß- oder Mörtelmasse dienen, die baustellenseitig zwischen Rohroberfläche und Bohrungsinnenfläche eingebracht werden soll. Diese Lösung kann zwar eine Abdichtung zwischen der Mauerdurchführung und dem Mauerwerk bewirken, hat jedoch den Nachteil eines sehr aufwendigen Montagevorgangs.

Hier setzt die Neuerung ein, die es sich zur Aufgabe gestellt hat, eine Mauerdurchführung anzugeben, welche die Nachteile des Standes der Technik nicht aufweist und darüberhinaus bei optimaler Abdichtung eine einfache Montage zuläßt.

Erfindungsgemäß werden dazu die in dem Anspruch 1 angegebenen Merkmale vorgeschlagen.

Wesentliches Merkmal der neuerungsgemäßen Mauerdurchführung ist die Tatsache, daß das Rohr und der Durchführungsbereich vom Durchmesser her so klein wie möglich gehalten wird. Hier besteht also die Lehre, daß die Bohrung oder der Mauerdurchbruch nicht größer als der äußere Umfang des rohrfömigen Durchführungsbereiches ist, so daß dieser Bereich bündig in die Bohrung oder Durchführung eingeschoben ist. Erst im eigentlichen Dichtbereich erfolgt eine Beeinflussung des Rohrumfangs durch eine Profilierung. Der Dichtbereich der Mauerdurchführung arbeitet hier insofern mit dem Mauerdurchbruch zusammen, als die Profilierung in eine zum Außenbereich des Bauwerkes gerichtete erweiterte Öffnung eingesetzt ist. Hierbei ist die größte Öffnungsweite zum Außenbereich des Mauerwerks gerichtet.

Werden für die Profilierung des Dichtabschnitts nach außen gerichtete Radialwellungen verwendet, so dient die an das gerade Hohlteil angeschlossene erste Radialwellung als Anschlagerhebung an dem zugeordneten Wandbereich der erweiterten Öffnung. Diese Radialwellung übernimmt also die Aufgabe der Anschlagbegrenzung beim Einschub der Mauerdurchführung in die Maueröffnung. Sobald diese Radialwellung im Übergangsbereich zur kleineren Öffnung anschlägt, befindet sich die Mauerdurchführung in ihrem Endsitz.

Durch die erweiterte Öffnung im Mauerwerk über dem profilierten Dichtabschnitt ist eine optimale Einfüllöffnung für das Dichtungsmaterial gegeben. Dieses Dichtungsmaterial kann auch von außen her vorteilhaft in den Aufnahmeraum eingepresst werden. Zusätzlich verhindern die Radialwellungen auf der Oberfläche des Dichtabschnitts einen Durchtritt von Feuchtigkeit in das Innere des Mauerdurchbruchs. Die erweiterte Öffnung im Außenbereich des Bauwerks kann zylindrisch, trichterförmig oder ähnlich gestaltet sein.

Zur besseren Verbindung mit dem einzufüllenden Dichtmaterial kann der Dichtabschnitt in seinem äußeren Umfang mit einer Dichtbeschichtung versehen sein. Diese kann zusätzlich zu der Profilierung dieses Bereiches eingesetzt werden, wodurch die Abdichtwirkung insgesamt erhöht wird.

Es ist vorteilhaft, daß das freie Ende des zum Bauwerksinneren gerichteten geraden Hohlteils mit einem Stopfen verschließbar ist. Dieser Stopfen kann eine Kegelspitze aufweisen, wodurch die Möglichkeit besteht, die neuerungsgemäße Mauerdurchführung erst nach dem Verfüllen des Bohrloches mit Dichtmaterial einzuführen. Auf diese Weise kann eine dichte Mauerdurchführung auch beispielsweise durch eine Mauer mit Hohlblocksteinen erzielt werden. Hier wird die erweiterte Öffnung in den angebohrten Hohlkammern der Hohlblocksteine zunächst vollständigt mit Dichtmaterial ausgefüllt und danach die Mauerdurchführung durch das Dichtmaterial eingeschoben. Das Dichtmaterial wird durch die Mauerdurchführung während des Durchschiebevorganges in die Hohlkammern eingepresst, so daß beim Anschlag der ersten Radialwellung im Bereich der geringeren Öffnung sämtliche Hohlräume der Mauer im Dichtbereich mit Dichtmitteln verfüllt sind.

Es ist ferner zweckmäßig, daß der Anschlußstutzen mit einem Schrumpfschlauch versehen ist, wobei das freie Ende des Schrumpfschlauches beispielsweise durch Verschweißen gas- und flüssigkeitsdicht abgeschlossen ist.

Auf diese Weise ist die nach außen ragende Verlängerung der Mauerdurchführung vor dem Eintritt von Feuchtigkeit oder Gasen aus dem Umgebungsbereich des Bauwerks geschützt.

Zur Abstützung gegen den Anpressdruck des Schrumpfschlauches kann der Anschlußstutzen wenigstens im überschrumpften Bereich mit einer inneren Verstärkungshülse versehen sein. Darüberhinaus kann der Anschlußstutzen zur besseren Halterung des aufgeschrumpften Schrumpfschlauches profiliert oder zu seinem freien Ende hin konisch aufgeweitet sein.

Im Bedarfsfall können auch auf eine oder mehrere der Radialwellungen des Dichtabschnitts Verdickungskaliber aufgesetzt werden.

Im Bereich des Anschlußstutzens, d.h. also in dem Bereich, in dem die Mauerdurchführung in Richtung zum Außenbereich des Bauwerks aus der Wand austritt, liegt der kritischste Bereich für die Dichtwirkung der Mauerdurchführung. In diesem Bereich ist der kurze, starre Abschnitt im Anschluß an den Dichtabschnitt angeordnet. Dieser kurze starre Abschnitt besitzt den geringen Durchmesser des geraden Hohlteils des zum Bauwerksinneren gerichteten Abschnittes. Dieser starre Abschnitt ist geeignet, geringe Zug- und Biegekräfte ohne Deformation aufzunehmen. Es erfolgt also keine Verjüngung des Rohrquerschnittes wie bei flexiblen, spiralverstärkten Mauerdurchführungen, so daß die Nachteile solcher Durchführungen - Unterbrechung des Kontaktes der Durchführungsoberfläche zum Mörtel und damit infolge Undichtigkeit - bei der neuerungsgemäßen Mauerdurchführung nicht eintreten.

Die erfindungsgemäße Mauerdurchführung berücksichtigt auch, daß der starre Abschnitt ohne Gefahr der Beschädigung beliebig große Biegekräfte aufnehmen kann. Aus diesem Grunde schließt sich an den starren Abschnitt der flexible Abschnitt an, der die Form eines üblichen Wellrohres besitzen kann. Solche Rohrteile können ohne großen Kraftaufwand gebogen werden.

Dadurch bleiben die tatsächlich auf den starren Abschnitt wirkenden Biegekräfte sehr gering. Ebenfalls werden Zugkräfte als resultierende aus Bodenabsenkungen des Kabelgrabens durch diesen flexiblen Abschnitt beliebiger Länge abgefangen. Dieser flexible Abschnitt geht in den Anschlußstutzen über, welcher zumindest teilweise von einem mit Heißschmelzkleber beschichteten Schrumpfschlauch übergriffen ist. Damit der Anschlußstutzen beim Schrumpfvorgang des Schrumpfschlauches nicht verdrückt wird, ist in seinem Inneren eine Stützhülse angeordnet. Das ist z.B. für Kabelauswechslungen wichtig, da beliebig oft ein neuer Schrumpfschlauch auf den Anschlußstutzen geschrumpft werden kann. Das Ende des Schrumpfschlauches ist beispielsweise durch Verschweißen bis zu Abschluß der Montage fest verschlossen. Bei diesem Schweißvorgang wird die innere Heißschmelzkleberschicht des Schrumpfschlauches aufgeschmolzen und zusammengepresst, so daß der hermetische Abschluß erfolgt.

Anstelle des einen Schrumpfschlauches am Anschlußstutzen kann neuerungsgemäß auch ein Verteilerstück mit zwei oder mehreren abdichtbaren Abgängen an den Anschlußstutzen angebracht werden. Dies ist sowohl werkseitig als auch erst auf der Baustelle möglich.

Das zum Bauwerksinneren gerichtete gerade Hohlteil kann in seinem überstehenden Bereich auf einen gewünschten Oberstand gekürzt werden, da hier lediglich die aus Kunststoff bestehende Rohrwand durchtrennt werden muß. Hier kann dann zu einem optisch einwandfreien Abschluß auf den aus der Innenwand herausragenden Rohrstutzen eine Abdeckscheibe aufgesteckt werden. Diese kann in ihrem Mündungsbereich so gestaltet sein, daß sie sich elastisch an verschiedene Kabeldurchmesser anpassen kann.

Schließlich ist noch darauf hinzuweisen, daß die neuerungsgemäße Mauerdurchführung nicht auf eine trichterförmige Ausbildung des Maueröffnungsbereiches im Dichtabschnitt beschränkt ist.

Vielmehr können hier auch zylindrische oder andere Querschnittsformen der Maueröffnung Verwendung finden. Es ist lediglich wichtig, daß diese außenliegende größere Maueröffnung einen im Mauerwerk liegenden Abschluß findet, an dem die erste Radialwellung bei der Durchführung des geraden Hohlteils durch die im Durchmesser entsprechende Öffnungsbohrung anschlagen kann.

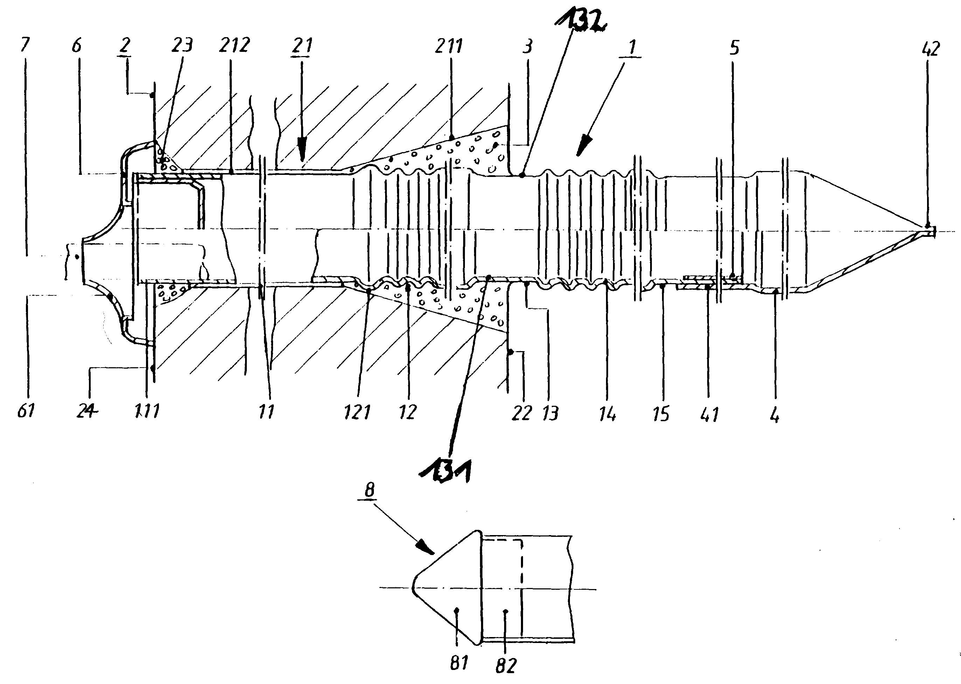

In der Zeichnung ist ein Ausführungsbeispiel der neuerungsgemäßen Mauerdurchführung schematisch dargestellt. Die Mauerdurchführung 1 besteht aus dem hohlen Bauteil, welches in die Öffnung 21 des Mauerwerks 2 eingesetzt ist. Die Öffnung 21 ist in die nach außen gerichtete Öffnung 211, die in der Darstellung trichterförmig gezeigt ist, und in die nach innen gerichtete Öffnung 212, welche zylindrisch dargestellt ist, unterteilt. Die nach innen gerichtete Öffnung 212 ist nur geringfügig größer als der Außendurchmesser des geraden Hohlteils 11 der Mauerdurchführung 1. An das gerade Hohlteil 11 schließt der Dichtabschnitt 12 der Mauerdurchführung 1 an. Der Dichtabschnitt 12 ist in der gezeigten Darstellung profiliert gestaltet, wobei die Profilierungen als Radialwellungen ausgebildet sind. Die Radialwellung 121, die direkt an das gerade Hohlteil angeschlossen ist, ist als Anschlagwellung für den kleinsten Durchmesserbereich der trichterförmigen Öffnung 211 ausgebildet.

An den Dichtabschnitt 12 schließt einstückig der kurze, starre Abschnitt 13 an, der im Durchmesser dem geraden Hohlteil 11 entspricht. Aus der Zeichnung ist ersichtlich, daß der starre Abschnitt 13 annähernd zur Hälfte von dem Dicht- oder Füllmittel 3 übergriffen wird, während er andererseits über die äußere Oberfläche 22 des Mauerwerks 2 vorsteht. An diesen nach außen ragenden Teil des starren Abschnitts 13 schließt der flexible Abschnitt 14 an, der als Wellrohrabschnitt gestaltet sein kann. Dieser flexible Abschnitt 14 endet in einem einstückig angeformten äußeren Anschlußstutzen 15. Der Anschlußstutzen 15 ist von einem Schrumpfschlauch 4 übergriffen, wobei der Schrumpfschlauch 4 im Bereich der Übergreifung 41 auf den Anschlußstutzen 15 aufgeschrumpft ist.

Zur Verstärkung des Anschlußstutzens 15 in diesem Bereich ist die Verstärkungshülse 5 in den Anschlußstutzen 15 eingesetzt.

Der Schrumpfschlauch 4 ist an seinem vorderen freien Ende 42 durch Verschweißen gas- und flüssigkeitsdicht abgeschlossen. An der Innenseite 24 des Mauerwerks 2 steht ein kurzes Stück 111 des geraden Hohlteils 11 über die Ebene des Mauerwerks 2 über. Dieser Überstand wird durch die Abdeckkappe 6 abgedeckt, durch die beispielsweise Ausbrüche 23, die bei der Herstellung der Bohrung 21 aufgetreten sind, abgedeckt werden können. Die Abdeckkappe 6 hat ein flexibles Ausgangsteil 61, durch den ein Kabel 7 durchgeführt ist.

In der Figur ist durch eine gebrochene Schnittzeichnung ebenfalls dargestellt, in welcher Form der Kegelstopfen 8 in das freie Ende des geraden Hohlteils 11 eingebracht werden kann. Der Kegelstopfen 8 besteht aus einem äußeren Kegelteil 81 und einem Einsatzbereich 82, mit dem der Stopfen 8 in der lichten Weite des geraden Hohlteils festgelegt ist.

## Patentansprüche

1. Mauerdurchführung für Rohre, Kabel oder Leitungen, bestehend aus einem in den Mauerdurchbruch eingesetzten hohlen Bauteil, wobei das hohle Bauteil gegen das Mauerwerk im Durchführungsbereich abgedichtet ist und auf seine Länge verteilt Abschnitte unterschiedlichen Querschnitts aufweist, von denen der zum Bauwerksinneren gerichtete Abschnitt ein gerades Hohlteil (11) ist, an welches sich in Richtung zum Außenbereich des Mauerwerks ein profilierter Dichtabschnitt (12) mit einem Wandaustrittsbereich (13) anschließt, und wobei der Wandaustrittsbereich (13) ein starres, mit den Dichtabschnitt (12) verbundenes Rohrstüch ist, welches mit seinem Teilbereich (131) im Mauerwerk (2) fest verankert ist und über seinen freiliegenden Teilbereich (132) mit einem flexiblen Abschnitt (14) beliebiger Länge verbunden ist, welcher in einem äußeren Anschlußstutzen (15) endet.

2. Mauerdurchführung nach Anspruch 1, dadurch gekennzeichnet, daß das gerade Hohlteil (11), der Dichtabschnitt (12) der starre Abschnitt (13), der flexible Abschnitt (14) und der Anschlußstutzen (15) einstückig hergestellt sind.

3. Mauerdurchführung nach Anspruch 1, dadurch gekennzeichnet, daß der Dichtabschnitt (12) mit einer am äußeren Umfang angeordneten Dichtbeschichtung versehen ist.

4. Mauerdurchführung nach Anspruch 3, dadurch gekennzeichnet, daß die Profilierung nach außen gerichtete Radialwellungen (121) sind.

5. Mauerdurchführung nach Anspruch 1, dadurch gekennzeichnet, daß der Dichtabschnitt (12) ein einer nach außen gerichteten Öffnung (211) des Mauerwerks positioniert ist.

6. Mauerdurchführung nach Anspruch 5, dadurch gekennzeichnet, daß die nach außen gerichtete Öffnung (211) trichterförmig ausgebildet ist mit einer zum Außenbereich des Bauwerks gerichteten größten Öffnungsweite des Trichters.

7. Mauerdurchführung nach Ansprüchen 5 und 6, dadurch gekennzeichnet, daß in die Öffnung (211) ein Dicht- oder Füllmittel (3) eingebracht ist, welches im Einbauzustand mit dem Dichtabschnitt (12) in halternde Wirkverbindung tritt.

8. Mauerdurchführung nach Ansprüchen 5 und 6, dadurch gekennzeichnet, daß die erste, an das gerade Hohlteil (11) angeschlossene Radialwellung (121) als Anschlagerhebung an dem zugeordneten Wandbereich der Öffnung (211) ausgebildet ist.

9. Mauerdurchführung nach Anspruch 1, dadurch gekennzeichnet, daß das freie Ende (111) des zum Bauwerksinneren gerichteten geraden Hohlteils (11) mit einem Stopfen (8) verschließbar ist.

10. Mauerdurchführung nach Anspruch 1, dadurch gekennzeichnet, daß am Anschlußstutzen (15) ein Schrumpfschlauch (4) aufgeschrumpft ist.

11. Mauerdurchführung nach Anspruch 10, dadurch gekennzeichnet, daß zur Verstärkung des Anschlußstutzens (15) wenigstens in diesem überschrumpften Bereich eine Verstärkungshülse (5) eingesetzt ist.

12. Mauerdurchführung nach Anspruch 10, dadurch gekennzeichnet, daß der Anschlußstutzen (15) an seinem Außenumfang profiliert ist.

13. Mauerdurchführung nach Anspruch 10, dadurch gekennzeichnet, daß der Anschlußstutzen (15) zu seinem freien Ende hin konisch aufgeweitet ist.

14. Mauerdurchführung nach Anspruch 10, dadurch gekennzeichnet, daß das freie Ende (42) des Schrumpfschlauches (4) gas- und flüssigkeitsdicht verschlossen ist.

15. Mauerdurchführung nach Anspruch 4, dadurch gekennzeichnet, daß auf eine oder mehrere der Radialwellungen (121) Verdickungskaliber aufsetzbar sind.

## Claims

1. Wall duct for pipes, cables or leads, consisting of a hollow component placed in the wall duct, whereby the hollow component is sealed against the wall in the duct area, and has sections of different cross-sections along its length, of which the section directed towards the wall interior is a straight hollow part (11) which is connected to a profiled sealing section (12) with a wall outlet area (13), and whereby the wall outlet area (13) is a rigid pipe section connected to the sealing section (12), which, with its part area (131) is fixed and anchored to the wall (2) and which is connected via its exposed part area (132) to a flexible section (14) of any length, which ends in an external connecting branch (15).

2. Wall duct in accordance with Claim 1, characterised in that the straight hollow part (11), the sealing section (12), the rigid section (13), the flexible section (14) and the connecting branch (15) are produced as a single piece.

3. Wall duct in accordance with Claim 1, characterised in that the sealing section (12) has a seal coating over its exterior.

4. Wall duct in accordance with Claim 3, characterised in that the profiling consists of radial corrugations (121) projecting outwards.

5. Wall duct in accordance with Claim 1, characterised in that the sealing section (12) is positioned in an exterior-facing opening (211) of the wall.

6. Wall duct in accordance with Claim 5, characterised in that the exterior-facing opening (211) is funnel-shaped, with the widest end of the funnel at the outer area of the structure.

7. Wall duct in accordance with Claims 5 and 6, characterised in that a sealing or filling material (3) is included in the opening (211), this sealing or filling material achieving a connection effect with the sealing section (12) when installed.

8. Wall duct in accordance with Claims 5 and 6, characterised in that the first radial corrugation (121) connected to the straight hollow part (11) is designed as a stopping elevation on the matching wall area of the opening (211).

9. Wall duct in accordance with Claim 1, characterised in that the free end (111) of the straight hollow part (11) directed towards the interior of the structure can be closed by means of a plug (8).

10. Wall duct in accordance with Claim 1, characterised in that a shrink sleeving (4) is shrunk on to the connecting branch (15).

11. Wall duct in accordance with claim 10, characterised in that a reinforcement sleeve (5) is used to reinforce this connecting branch (15) at least in this shrink-sleeving area.

12. Wall duct in accordance with Claim 10, characterised in that the connecting branch (15) is profiled around its exterior.

13. Wall duct in accordance with Claim 10, characterised in that the connecting branch (15) is conically expanded to its free end.

14. Wall duct in accordance with Claim 10, characterised in that the free end (42) of the shrink sleeving (4) seals against water and gas.

15. Wall duct in accordance with Claim 4, characterised in that thickening calibres can be attached to one or more of the radial corrugations (121).

## Revendications

1. Traversée murale pour tubes, câbles ou lignes électriques constituée d'un élément creux monté dans la percée murale, dont l'élément creux est calfeutré contre la maçonnerie au niveau de la traversée murale et présente des segments de différentes sections, parmi lesquels le segment orienté vers l'intérieur de la maçonnerie est un élément creux droit (11) auquel est raccordé un élément d'étanchéité profilé (12) avec sortie murale (13), orienté vers l'extérieur de la maçonnerie, dont cette sortie murale (13) est un tube rigide raccordé à l'élément d'étanchéité (12), une partie du tube (131) étant solidement scellée dans le mur (2), l'autre partie dégagée (132) raccordant le tube à un segment flexible (14) de longueur quelconque, qui se termine dans un embout de connexion (15).

2. Traversée murale selon revendication 1, caractérisée en ce que l'élément creux droit (11), l'élément d'étanchéité (12), le segment droit (13), le segment flexible (14) et l'embout de connexion (15) sont fabriqués en une seule pièce.

3. Traversée murale selon revendication 1, caractérisée en ce que l'élément d'étanchéité (12) est muni à l'extérieur d'un revêtement d'étanchéité.

4. Traversée murale selon revendication 3, caractérisée en ce que le profilé consiste en ondulations radiales (121) orientées vers l'extérieur.

5. Traversée murale selon revendication 1, caractérisée en ce que l'élément d'étanchéité (12) est positionné dans une ouverture de la maçonnerie (211), orientée vers l'extérieur.

6. Traversée murale selon revendicaton 5, caractérisée en ce que l'ouverture orientée vers l'extérieur (211) a la forme d'un entonnoir, avec l'ouverture la plus grande vers l'extérieur de la maçonnerie.

7. Traversée murale selon revendications 5 et 6, caractérisée en ce qu'un matériau d'étanchéité ou de remplissage (3) est mis en place dans l'ouverture (211), lequel assure avec l'élément d'étanchéité (12) l'efficacité du raccord à l'état monté.

8. Traversée murale selon revendications 5 et 6, caractérisée en ce que la première ondulation radiale (121), raccordé à l'élément creux droit (11), plus haute, sert de butée dans l'ouverture (211) de la maçonnerie.

9. Traversée murale selon revendication 1, caractérisée en ce que l'extrémité libre (111) de l'élément creux droit (11) orienté vers l'intérieur de l'ouvrage peut être scellée à l'aide d'un capuchon (8).

10. Traversée murale selon revendication 1, caractérisée en ce qu'une gaine thermorétractable (4) est gainée sur l'embout de connexion (15).

11. Traversée murale selon revendication 10, caractérisée en ce qu'une douille de renforcement (5) est utilisée pour renforcer l'embout de connexion (15) au moins au niveau de cette partie gainée.

12. Traversée murale selon revendication 10, caractérisée en ce que l'embout de connexion (15) est profilé sur tout son pourtour.

13. Traversée murale selon revendication 10, caractérisée en ce que l'extrémité libre de l'embout de connexion (15) est expansée coniquement.

14. Traversée murale selon revendication 10, caractérisée en ce que l'extrémité libre (42) de la gaine thermorétractable (4) est étanche au gaz et au liquide puisque obturée.

15. Traversée murale selon revendication 4, caractérisée en ce que des calibres de positionnement peuvent être montés sur une ou plusieurs des ondulations radiales (121).
